# EUROPEAN PATENT APPLICATION

(11) **EP 1 959 708 A1**
(43) Date of publication of application: **20.08.2008**
(21) Application number: 08100782.5
(22) Date of filing: 22.01.2008
(51) Int. Cl.: H04Q 7/38

(54) **Methods and systems for handover process in wireless communication networks**

(30) Priority: 26.01.2007 US 897790 P; 17.01.2008 US 16178
(71) Applicant: Industrial Technology Research Institute, Chutung Hsinchu Taiwan 310 (CN)
(72) Inventor: Wang, Chun-Yen, 709, Tainan City (TW); Sheen, Wern-Ho, 621, Minsyong Township, Chiayi County (TW)
(74) Representative: 2K Patentanwälte Kewitz & Kollegen

(57) **Abstract**

A method for performing a handover process in a wireless communication system (50), the method comprising allocating a communication channel to a first infrastructure station (500a) in the wireless communication system, reserving a signature corresponding to the communication channel for the first infrastructure station, the signature enabling a user equipment (504) attached to the first infrastructure station to communicate with a second infrastructure station (500b) in the wireless communication system over the communication channel, receiving from the user equipment (504) a message including the signature over the communication channel, determining a timing advance as an offset to a delay of the message, and sending the timing advance to the user equipment (504) through the first infrastructure station (SOOa).

## Description

### CROSS-REFERENCE TO RELATED APPLICATIONS

This application claims the priority under Art 87. EPC from U.S. Provisional Patent Application No. 60/897,790, filed on January 26, 2007 and U.S. Patent Application No. 12/016,178 filed on January 17, 2008, the whole contents of which are hereby incorporated by reference.

### BACKGROUND OF THE INVENTION

The present invention relates to a handover process in wireless communication networks. More particularly, the present invention relates to methods and systems for a handover process in wireless communication networks.

Wireless communication networks may play an important role in the exchange of audio, video or other type of data or information. A wireless communication network may include a mobile station (MS) and a plurality of infrastructure stations such as one or more base station (BS) and/or relay station (RS). A user equipment (UE) such as an MS attached under one of the infrastructure stations may be capable of exchanging information or data with the infrastructure stations or other UEs in the wireless communication network. Each of the infrastructure stations may have a specified or predetermined coverage of communication so that information or data in the coverage may be communicated with desirable signal power and bit error rate (BER). A serving (or source) infrastructure station or access station for a UE may need to perform a handover process when the UE is going to move across the edge or boundary of the coverage of the serving (or source) infrastructure station and/or going to enter the coverage of another infrastructure station. The handover process may attach the UE to the other infrastructure station so that the UE may be capable of communicating with the other infrastructure station. Moreover, the other infrastructure may be called a target infrastructure station (target station) for the UE during the handover process.

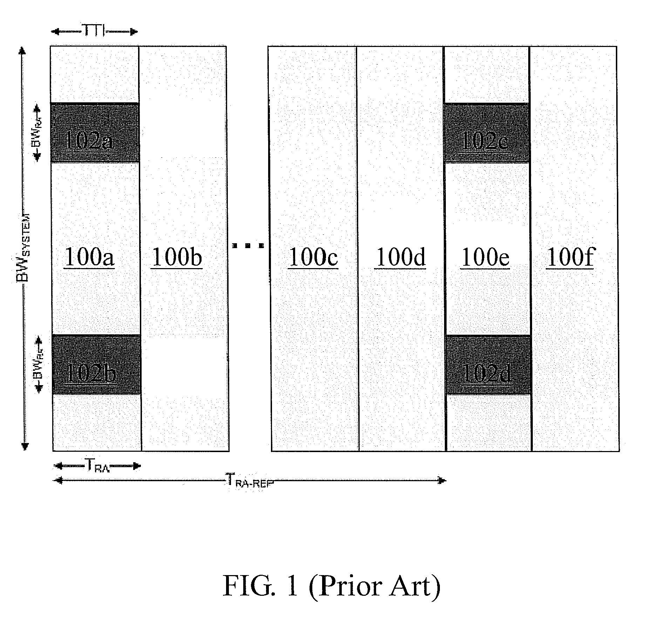

A contention-based non-synchronized random access channel (RACH) may be used by a UE for sending, requesting or receiving information related to a communication channel. The communication channel may be allocated by a serving infrastructure station to the UE when the UE enters the coverage of the serving infrastructure station or the serving infrastructure station decides to switch the UE to another infrastructure station, i.e., a target infrastructure station, prior to or during performing a handover process. Moreover, to perform the handover process, it may be necessary for the UE to obtain communication information and synchronize with the target infrastructure station. FIG. 1 is a diagram of exemplary random access channels 102a, 102b, 102c and 102d in a wireless communication system. Referring to FIG. 1, the random access channels 102a to 102d may be inserted into a sequence of data transmission 100a, 100b, 100c, 100d, 100e and 100f. The random access channels 102a to 102d may be allocated by the serving infrastructure station to the UE. The UE may send a signal to the serving infrastructure station over the random access channels 102a to 102d. When the signal is received, the serving infrastructure station may estimate or measure a propagation delay of the signal and determine a timing advance for the UE in order to offset the propagation delay. In some applications, the random access channels 102a to 102d may be allocated periodically into the sequence of data transmission 100a to 100f.

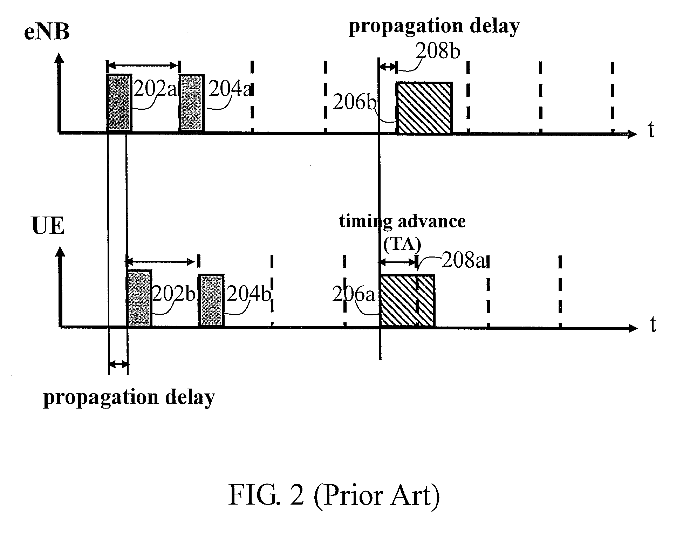

FIG. 2 is a diagram illustrating an exemplary propagation delay and timing advance. The propagation delay may occur during signal or data transmission between an infrastructure station "eNB" and a user equipment (UE). Referring to FIG. 2, the eNB may send signals 202a and/or 204a to the UE through a communication channel allocated by the eNB. Propagation of the signals 202a and/or 204a over the communication channel may induce a propagation delay at the receiving side, that is, the UE. The UE may send a signal or data 206a to the eNB at a time ahead of a scheduled sending time 208a by an amount of time, which may allow the eNB to subsequently receive a signal or data 206b at a scheduled receiving time 208b. The amount of time ahead of the scheduled sending time 208a for the UE to early send the signal 206a is called the "timing advance (TA)". Note that the propagation delay may occur in the transmission of the signal 202a from the eNB to the UE and the signal 206a from the UE to the eNB, and thus is often termed a "round-trip delay". The TA may be estimated at the eNB to compensate for the round-trip delay.

Moreover, it may also be necessary for the UE to obtain communication information on the allocated communication channel. For example, the communication information may include information related to the resource allocation of the target infrastructure station to which the UE may be switched, the channel condition of a new communication channel for communication between the target infrastructure station and the UE, or the channel bandwidth of the new channel and/or transmission power of the target infrastructure station. Generally, a non-synchronized random access may be used for the UE to obtain an uplink timing advance (UL TA) when the UE is to be switched into a new non-synchronized target coverage of the target infrastructure station.

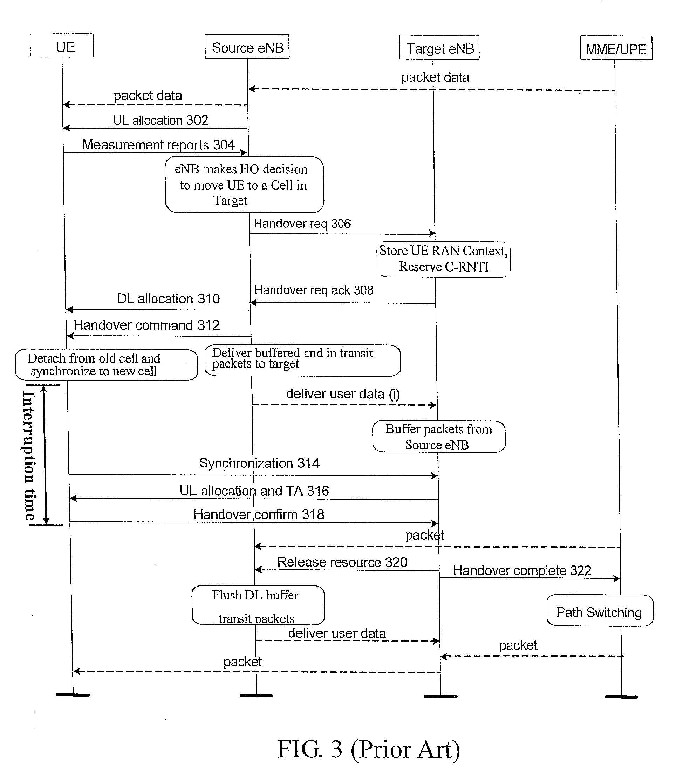

FIG. 3 is a flow chart illustrating signaling flow of a handover process for a UE in a wireless communication system. Referring to FIG. 3, the system may include a number of nodes comprising a UE, a source eNB, a target eNB and a mobility management entity/user plane entity (MME/UPE) gateway. The source eNB may refer to a serving/access infrastructure station for the UE and the target eNB may refer to an infrastructure station to which the UE may be attached after performing the handover process. At the beginning, the MME/UPE gateway may send packet data to the source eNB, which in turn may forward the packet data to the UE. At step 302, the source eNB may send "uplink allocation" information to the UE and also send signals such as the signals 202a and/or 204a shown in FIG. 2. At step 304, the UE may send "measurement reports" over the allocated uplink resource to the source eNB after measuring the signals. The source eNB may then make a handover decision to move the UE to a cell of the target eNB if the measurement reports show the link performance between the UE and the source eNB become unacceptable so that the UE may need to switch to the target eNB. After making the handover decision, at step 306, the source eNB may send a handover request to the target eNB, which informs the target eNB that the UE attached to the source eNB is going to move into the cell of the target eNB. The handover request may include information on or characteristics of the UE (UE RAN context). Upon receiving the handover request, the target eNB may reserve an identification code (C-RNTI) and/or a random access channel for the UE before getting ready to start the handover process. The target eNB may then send a handover request acknowledgement (handover req ack) back to the source eNB at step 308. The handover request acknowledgement may include the C-RNTI and/or the information on the random access channel.

Next, at step 310, the source eNB may allocate a downlink resource in order to send a handover command at step 312 to forward the information to the UE and inform the UE that the handover process will start. The UE may start to detach itself from the old cell of the source eNB and synchronize itself with the target eNB. At the same time, the source eNB may buffer packets from/to the UE and transmit the buffered and in-transit packets to the target eNB during the handover process. The UE may start a synchronization process at step 314. Furthermore, the target eNB may send uplink resource information and TA at step 316 and then the UE may send a handover confirm over the allocated uplink resource to inform the target eNB that the synchronization process is finished at step 318. After the synchronization process, the UE may be switched to the target eNB. Then the target eNB may send a message to the source eNB to release its resources associated with the UE at step 320. Also, the target eNB may send a message "handover complete" to inform the gateway to send packets through the target eNB hereafter at step 322. The gateway may perform path switching, and the source eNB may flush the buffer and release radio resources associated with the UE and continue delivering the buffered UE packets to the target eNB. When the handover process is completed, the gateway may start to send packets to the target eNB, and the target eNB may forward the packets to the UE.

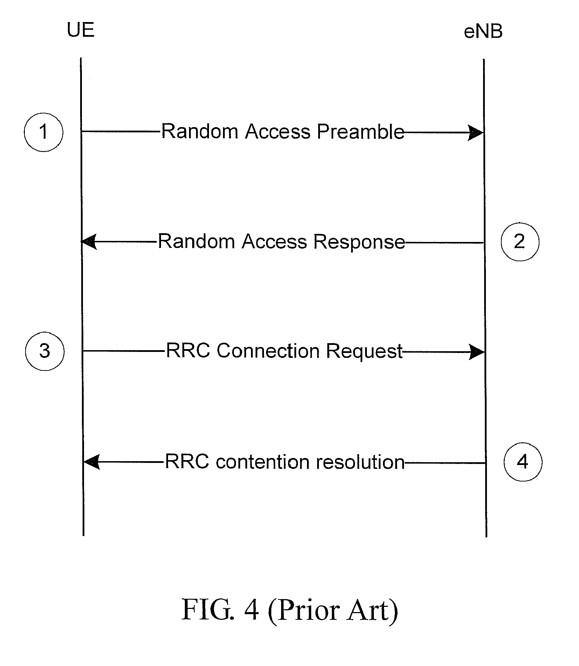

FIG. 4 is a flow chart of an exemplary random access channel procedure (RACH channel or Ranging channel) for a contention-based random access channel. Referring to FIG. 4, when switching to the target eNB, the UE may need to wait for RACH opportunities, and send a random access preamble to obtain a TA before the UE can resume connection at step 1. The random access preamble may include orthogonal codes such as RACH signatures (or ranging codes). The eNB may reply with a random access response to the UE at step 2. Since more than one UEs may contend for the communication channel at the same time, to handle the contention, the UE may send an RRC connection request to the eNB for a resolution to the contention at step 3. The eNB may send an RRC contention resolution result to the UE at step 4. However, in a sense of the 3GPP TS 25.912 standard, the random access procedure may cause an overall handover latency or delay of approximately 25 to 30 milliseconds (ms). Such a handover latency or delay may hinder a wireless communication system from a real time service such as a VOIP service. Moreover, if collision occurs in the RACH access procedure, the handover delay may further increase by, for example, 10 ms. It may therefore be desirable to have a method and a system to eliminate the handover interruption time and alleviate RACH collision when performing an uplink synchronization.

### BRIEF SUMMARY OF THE INVENTION

Examples of the present invention may provide a method for performing a handover process in a wireless communication system, the method comprising allocating a communication channel to a first infrastructure station in the wireless communication system, reserving a signature corresponding to the communication channel for the first infrastructure station, the signature enabling a user equipment attached to the first infrastructure station to communicate with a second infrastructure station in the wireless communication system over the communication channel, receiving from the user equipment a message including the signature over the communication channel, determining a timing advance as an offset to a delay of the message, and sending the timing advance to the user equipment through the first infrastructure station.

Some examples of the invention may also provide a method for performing a handover process in a wireless communication system, the method comprising initiating a handover process, sending a handover indication to a user equipment, the handover indication including a signature provided by an infrastructure station and corresponding to a communication channel allocated by the infrastructure station, receiving a timing advance as an offset to a delay between the infrastructure station and the user equipment, and sending the timing advance to the user equipment.

Examples of the invention may provide a method for performing a handover process in a wireless communication system, the method comprising receiving a handover indication from a first infrastructure station, the handover indication including a signature related to a communication channel allocated by a second infrastructure station, sending a message to the second infrastructure station over the communication channel, the message including the signature, and receiving from the first infrastructure station a timing advance as an offset to a delay between the second infrastructure station and the user equipment.

Examples of the invention may also provide a method for performing a handover process in a wireless communication system, the method comprising reserving a channel for a first infrastructure station in the wireless communication network, assigning a signature corresponding to the channel, deciding to switch a user equipment from the first infrastructure station to a second infrastructure station in the wireless communication system, sending a handover indication, the handover indication including the signature, sending a message to the second infrastructure station over the channel, the message including the signature, calculating a timing advance as an offset to a delay between the second infrastructure station and the user equipment, and sending the timing advance to the user equipment through the first infrastructure station.

Examples of the invention may still provide a wireless communication system for performing a handover process, the system comprising a first infrastructure station configured to decide whether to initiate a handover process for a user equipment, and a second infrastructure station configured to reserve a channel for the first infrastructure station and assign a signature corresponding to the channel, wherein the first infrastructure station is configured to send a handover indication to the user equipment, the handover indication including the signature, and wherein the second infrastructure station is configured to receive a message from the user equipment over the channel, the message including the signature, and calculate a timing advance as an offset to a delay between the second infrastructure station and the user equipment.

It will be appreciated by those skilled in the art that changes could be made to the examples described above without departing from the broad inventive concept thereof. It is understood, therefore, that this invention is not limited to the particular examples or embodiments disclosed, but it is intended to cover modifications within the spirit and scope of the present invention.

Additional features and advantages of the present invention will be set forth in part in the description which follows, and in part will be obvious from the description, or may be learned by practice of the invention. The features and advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

### BRIEF DESCRIPTION OF THE SEVERAL VIEWS OF THE DRAWINGS

The foregoing summary, as well as the following detailed description of the invention, will be better understood when read in conjunction with the appended drawings. For the purpose of illustrating the invention, there are shown in the drawings examples which are presently preferred. It should be understood, however, that the invention is not limited to the precise arrangements and instrumentalities shown.

In the drawings:

FIG. 1 is a diagram of exemplary random access channels in a wireless communication system;

FIG. 2 is a diagram illustrating an exemplary propagation delay and timing advance;

FIG. 3 is a flow chart illustrating signaling flow of a handover process for a user equipment in a wireless communication system;

FIG. 4 is a flow chart of an exemplary random access channel procedure for a contention-based random access channel;

FIG. 5A and FIG. 5B are diagrams illustrating a wireless communication system configured to perform a handover process according to an example of the present invention;

FIG. 6 is a flow diagram illustrating a method for performing a handover process in a wireless communication system according to an example of the present invention;

FIG. 7A is a flow diagram illustrating a method for performing a handover process at a second infrastructure station in a wireless communication system according to an example of the present invention;

FIG. 7B is a flow diagram illustrating a method for performing a handover process at a first infrastructure station in a wireless communication system according to an example of the present invention;

FIG. 7C is a flow diagram illustrating a method for performing a handover process at a user equipment in a wireless communication system according to still an example of the present invention; and

FIG. 8 is a flow chart illustrating signaling flow of a method for performing a handover process in a wireless communication system according to another example of the present invention.

### DETAILED DESCRIPTION OF THE INVENTION

Reference will now be made in detail to the present examples of the invention, examples of which are illustrated in the accompanying drawings. Wherever possible, the same reference numbers will be used throughout the drawings to refer to the same or like parts.

In examples consistent with the present invention, control information may be handled by an infrastructure station such as a serving infrastructure station, source eNodeB or source eNB in a wireless communication system. In some examples, a user equipment (UE) may be configured to measure signal quality based on signals or data sent from a serving eNB and/or one or more neighboring eNB. The UE may then send measurement results to the source eNB, based on which the source eNB may decide whether a handover process to switch the UE to another eNB is required. Furthermore, in one example, the target eNB may reserve one or more signature corresponding to one or more random access channel (RACH) to facilitate the UE to obtain a timing offset (TA). The serving eNB may send information on the RACH signature reserved by the target eNB to the UE. The UE may send the RACH signature to the target eNB to facilitate the target eNB to calculate the TA. In another example, the target eNB may reserve a channel to facilitate the UE to obtain a timing offset (TA). The serving eNB may send information on the channel reserved by the target eNB to the UE. The UE may send a signal to the target eNB to facilitate the target eNB to calculate the TA. Since the reserved channel may be dedicated for the UE, that is, contention-free to the UE, the UE may have opportunities to communicate with the target eNB without waiting for any resolution to the contention. Moreover, the calculated TA may be sent from the target eNB through the serving eNB to the UE. Therefore, the interrupt time as previously discussed for synchronization in the handover process for the UE may be eliminated. As a result, the efficiency of the handover process for the UE may be improved and the handover delay or latency may be reduced.

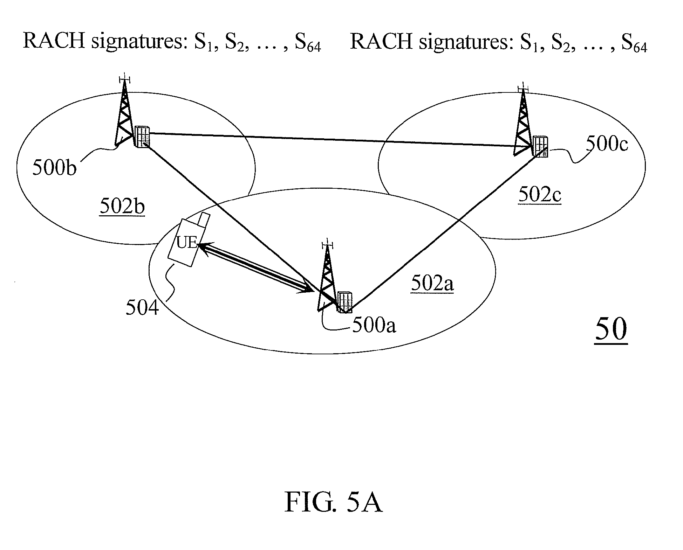

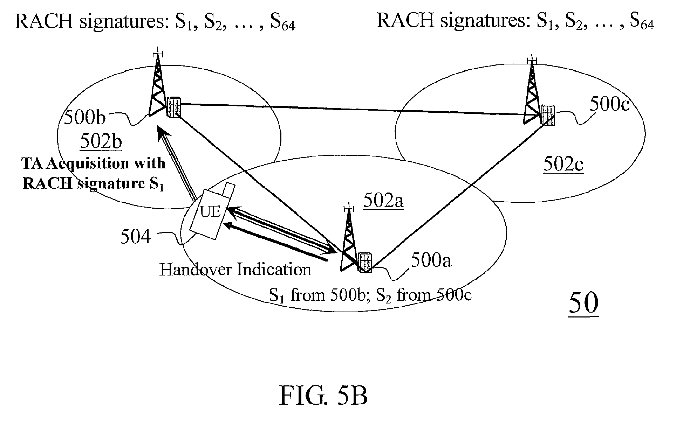

FIG. 5A and FIG. 5B are diagrams illustrating a wireless communication system 50 configured to perform a handover process according to an example of the present invention. Referring to FIG. 5A, the wireless communication system 50 may include a user equipment (UE) 504 and infrastructure stations (eNBs) 500a, 500b and 500c with cells 502a, 502b and 502c, respectively. The cells 502a, 502b and 502c may refer to a radio coverage of communication of the eNBs 500a, 500b and 500c, respectively. Furthermore, each of the eNBs 500a, 500b and 500c, which may be a base station or a relay station for the UE 504, may have sixty-four (64) random access channel (RACH) signatures S₁, S₂, ... and S₆₄ to support, for example, handover, for one or more UE in the cell of each of the eNBs 500a to 500c. The number of the RACH signatures, i.e., 64, is specified, for example, in the "Third Generation Partnership Project - Long Term Evolution (3 GPP LTE) standards, according to which a cell of an infrastructure station may include 64 signatures for one or more UE in adjacent cells to perform a handover process.

The UE 504 currently in the cell 502a may move out of the cell 502a into one of the adjacent cells 502b and 502c. The UE 504 may measure the signal quality such as signal power or bit error rate in each of the cell 502a and the adjacent cells 502b and 502c, and provide a report on the results of measurement to the serving eNB 500a. The report may indicate that the signal quality in the current cell 502a is not desirable due to, for example, the UE 504 being moving close to the boundary of the cell 502a. Furthermore, the report may also indicate that the signal quality in the cell 502b is better than that in the cell 502c. In one example according to the present invention, based on the report, the serving eNB 500a may decide to switch the UE 504 to the eNB 500b with the cell 502b. In another example, the serving eNB 500a may decide to switch the UE 504 to one of the adjacent eNBs 500b and 500c due to heavy traffic in the cell 502a. For example, the serving eNB 500a may be overloaded for serving an excessive number of UEs and may therefore decide to switch one or more of the UEs into adjacent cells.

Referring to FIG. 5B, the adjacent eNBs 500b and 500c may each reserve one or more signature for the eNB 500a. For example, the eNB 500b may reserve a first signature S₁ and the eNB 500c may reserve a second signature S₂ for the eNB 500a. When the UE 504 moves to the boundary of the cell 502a or the traffic in the cell 502a is heavy, the eNB 500a may send a handover indication to the UE 504 to inform the UE 504 that a target station for the UE 504 in the handover process, in the present example the eNB 500b, may have reserved the first signature S₁ for the UE 504. A synchronization process may be performed to synchronize the UE 504 to the target station 500b and a timing advance (TA) related to a preserved communication channel corresponding to the first signature S₁ may be identified at the target station 500b.

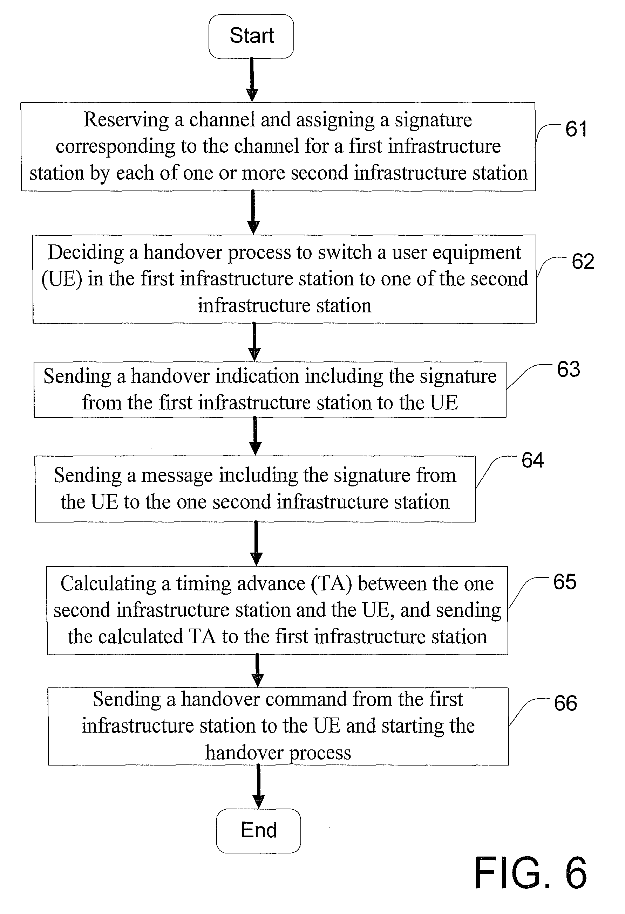

FIG. 6 is a flow diagram illustrating a method for performing a handover process in a wireless communication system according to an example of the present invention. Referring to FIG. 6 together with the system 50 illustrated in FIGS. 5A and 5B, at step 61, one of the adjacent eNBs such as the eNB 500b may reserve a channel for the eNB 500a currently serving the UE 504 and/or assign a signature corresponding to the channel. The channel reserved may be used for communication between the target station 500b and the UE 504 after a handover process is performed.

At step 62, the serving station 500a may decide to perform a handover to switch the UE 504 to the target station 500b because of the geographic location of the UE 504 or the traffic load of the serving station 500a.

At step 63, a handover indication may be sent from the serving station 500a to the UE 504. The handover indication may include the signature assigned by the target station 500b.

At step 64, the UE 504 may send a message to the target station 500b in order to synchronize the UE 504 to the target station 500b. The message may include the signature sent from the serving station 500a at step 63.

Upon receiving the message from the UE 504, at step 65, the target station 500b may calculate a timing advance (TA) between the UE 504 and the target station 500b, and send the calculated TA to the serving station 500a. Next, at step 66, a handover command may be sent from the serving station 500a to the UE 504 to start the handover process. The handover command may include the TA received from the target station 500b.

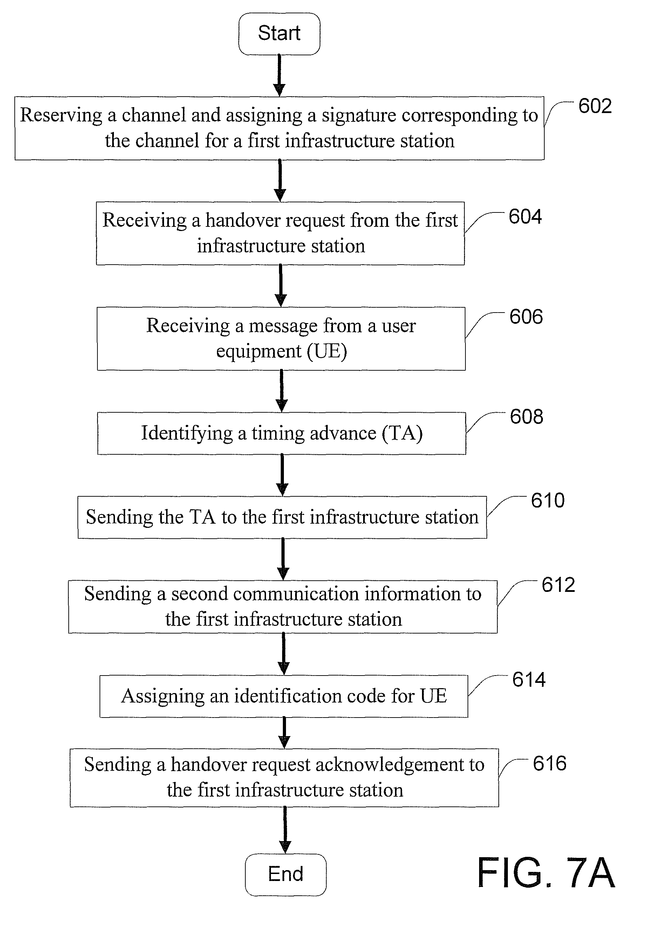

FIG. 7A is a flow diagram illustrating a method for performing a handover process at the target station 500b in the wireless communication system 50 according to an example of the present invention. Referring to FIG. 7A and also FIGS. 5A and 5B, at step 602, the target station 500b may reserve the channel and assign the signature for the serving station 500a. The signature may enable the UE 504 to communicate with the target station 500b over the reserved channel.

Next, at step 604, the target station 500b may receive a message such as a handover request from the serving station 500a. At step 606, a message sent from the UE 504 over the reserved channel may be received by the target station 500b. The message may include the signature.

Based on the signature S₁, at step 608, the target station 500b may calculate a timing advance (TA), which may be used to offset a round-trip propagation delay and thereby synchronize the UE 504 to the target station 500b. The target station 500b may send the TA to the serving station 500a at step 610 and send a second communication information to the serving station 500a at step 612. In one example, the second communication information may include information related to one or more of the resource allocation of the target station 500b, the channel condition, the channel bandwidth or the transmission power of the target station 500b. Furthermore, the second communication channel may include a random access channel (RACH).

Next, at step 614, the target station 500b may assign an identification code to the UE 504. At step 616, the target station 500b may send a handover request acknowledgement in response to the handover request from the serving station 500a at step 604. The handover request acknowledgement may include an assigned identification code, which may be used to identify the UE 504 when the UE 504 is attached to the target station 500b. Furthermore, the handover request acknowledgement may inform the serving station 500a or the UE 504 that the target station 500b is ready for the handover process to attach the UE 504.

In one example according to the present invention, one or more of the steps 604, 612, 614 and 616 may be optional and the sequence of which in performing the method described and illustrated in FIG. 7A may be insignificant. For example, the step 604 to receive the handover request and the step 616 to send the request acknowledgement may be performed after the step 610 or at any suitable point between steps 602 and 610. Furthermore, the step 612 to send the second communication information may be performed after the step 616, or simultaneously performed with the step 616. Moreover, the steps 612 and 616 may be performed simultaneously with the step 610 to send the TA.

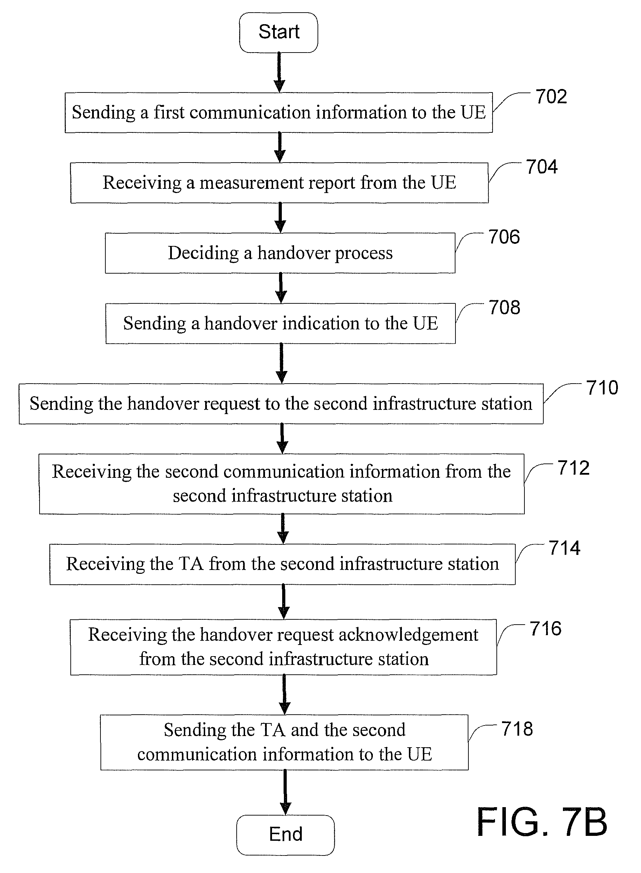

FIG. 7B is a flow diagram illustrating a method for performing a handover process at the serving station 500a in the wireless communication system 50 according to an example of the present invention. Referring to FIG. 7B and also FIGS. 5A and 5B, the serving station 500a may send a first communication information to the UE 504 at step 702. In one example, the first communication information may include information related to one or more of the resource allocation of the serving station 500a, the channel condition of a first communication channel allocated by the serving station 500a to the UE 504, the channel bandwidth of the first communication channel or the transmission power of the serving station 500a.

Next, at step 704, the serving station 500a may receive a measurement report from the UE 504. In one example, the measurement report may include information on the signal quality in the serving station 500a and the adjacent stations 500b and 500c. At step 706, the serving station 500a may decide to start a handover process due to heavy traffic in the cell 502a or the geographic location of the UE 504. Then, at step 708, the serving station 500a may send a handover indication to the UE 504. The handover indication may include the signature assigned by the target station 500b, which may be related to the reserved channel allocated by the target station 500b to the UE 504. The handover indication may request the UE 504 to send a message to the target station 500b over the reserved channel. The message from the UE 504 may include the signature and may facilitate the calculation of the TA.

At step 710, the serving station 500a may send the handover request to the target station 500b. Next, at step 712, the serving station 500a may receive the second communication information from the target station 500b. At step 714, the serving station 500a may receive the TA from the target station 500b. At step 716, the serving station 500a may receive the handover request acknowledgement from the target station 500b. Subsequently, at step 718, the serving station 500a may send the TA and the second communication information to the UE 504.

In one example according to the present invention, one or more of the steps 702, 704, 710, 712 and 716 may be optional and the sequence of which in performing the method described and illustrated in FIG. 7B may be insignificant. For example, the step 712 to receive the second communication information and the step 716 to receive the request acknowledgement may be performed simultaneously with the step 714 to receive the TA. Furthermore, the step 708 to send the handover request and the step 710 to send the handover request may be performed simultaneously.

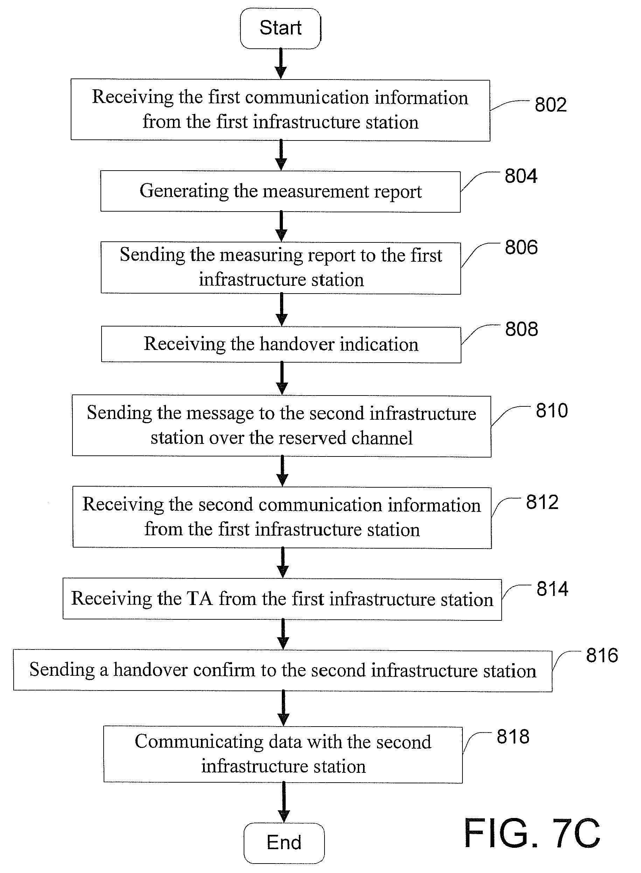

FIG. 7C is a flow diagram illustrating a method for performing a handover process at the UE 504 in the wireless communication system 50 according to an example of the present invention. Referring to FIG. 7C and also FIGS. 5A and 5B, at step 802, the UE 504 may receive the first communication information from the serving station 500a. Next, at step 804, the UE 504 may generate a measurement report on the signal quality in the serving station 500a and the adjacent stations 500b and 500c. At step 806, the UE 504 may send the measuring report to the serving station 500a. Next, at step 808, the UE 504 may receive the handover indication from the serving station 500a. The handover indication may include the signature assigned by the target station 500b. Then, at step 810, the UE 504 may send the message to the target station 500b over the reserved channel.

At step 812, the UE 504 may receive a second communication information from the serving station 500a. The second communication information may include information related to one or more of the resource allocation of the target station 500b, the channel condition of the reserved channel allocated by the target station 500b to the UE 504, the channel bandwidth of the reserved channel or the transmission power of the target station 500b. Next, the UE 504 may receive the TA from the serving station 500a at step 814. The UE 504 may send a message to the target station 500b to confirm the handover at step 816. The message on handover confirmation may inform the target station 500b that the UE 504 is ready for the handover process. Subsequently, at step 818, the UE 504 may communicate with the target station 500b when the handover process is completed.

In one example according to the present invention, one or more of the steps 802, 804, 806, 812 and 818 may be optional and the sequence of which in performing the method described and illustrated in FIG. 7C may be insignificant. For example, the step 812 to receive the second communication information and the step 814 to receive the TA may be performed simultaneously.

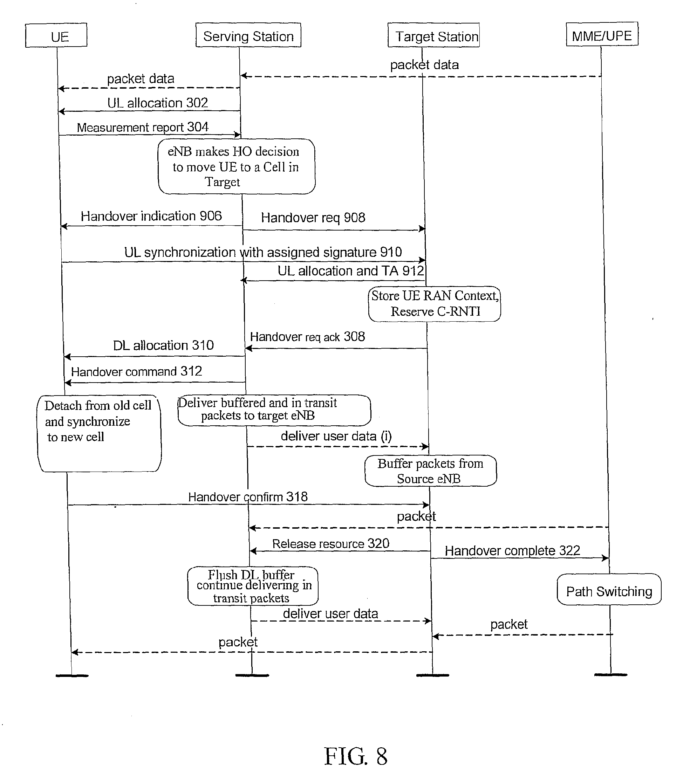

FIG. 8 is a flow chart illustrating signaling flow of a method for performing a handover process in a wireless communication system according to another example of the present invention. Compared with the method described and illustrated with reference to FIG. 3, the method according to the present invention may provide inventive steps as follows. Referring to FIG. 8 and also FIGS. 5A and 5B, when the serving station 500a decides to perform a handover process, the serving station 500a may send a handover indication to the UE 504 at step 906 and send a handover request to the target station 500b at step 908. The UE 504 may start to perform an uplink synchronization with the target station 500b based on an assigned signature at step 910. The serving station 500a may receive an uplink allocation and a timing advance (TA) from the target station 500b at step 912. In FIG. 8, the "UL allocation" at step 302 and the "UL allocation" at step 912 may correspond to the first communication information and the second communication information, respectively, as described and illustrated with reference to FIGS. 7A, 7B and 7C.

Since the target station 500b may reserve a dedicated communication channel for the UE 504, the communication channel may be contention-free to the UE 504. The UE 504 may have opportunities to communicate with the target station 500b without waiting for any resolution to contention. Therefore, the interruption time as previously discussed in FIG. 3 for a resolution to contention, for an opportunity of communication and for uplink synchronization may no longer be needed and therefore may be eliminated. As a result, the efficiency of the handover process for the UE 504 may be improved and the handover delay or latency may be reduced.

In the above examples described and illustrated with reference to FIGS. 6, 7A to 7C and 8, a target station may reserve a signature for a serving station. The signature may correspond to a random access channel (RACH), which may be one of the channels 102a to 102d shown in FIG. 1. The serving station may send information on the RACH signature reserved by the target station to a user equipment (UE). Upon receiving the RACH signature, the UE may send the same to the target station, which in turn may calculate a timing advance (TA) based on the round-trip time of the RACH signature. Once the TA is calculated, the target station may send the TA to the UE through the serving station.

In another example, the target station may reserve a channel rather than a RACH channel for the serving station. Like a RACH channel, the reserved channel may be dedicated for the UE and thus is contention-free to the UE. The channel may be one of the channels 100a to 100f except channels 102a to 102d shown in FIG. 1. The serving station may send information about the reserved channel to the UE. Upon receiving the channel information, the UE may send a signal to the target station on the reserved channel to facilitate the target station to calculate a TA. Subsequently, the calculated TA may be sent from the target station through the serving station to the UE.

It will be appreciated by those skilled in the art that changes could be made to the examples described above without departing from the broad inventive concept thereof. It is understood, therefore, that this invention is not limited to the particular examples disclosed, but it is intended to cover modifications within the spirit and scope of the present invention as defined by the appended claims.
In summary a method for performing a handover process in a wireless communication system is provided, the method comprising allocating a communication channel to a first infrastructure station in the wireless communication system, reserving a signature corresponding to the communication channel for the first infrastructure station, the signature enabling a user equipment attached to the first infrastructure station to communicate with a second infrastructure station in the wireless communication system over the communication channel, receiving from the user equipment a message including the signature over the communication channel, determining a timing advance as an offset to a delay of the message, and sending the timing advance to the user equipment through the first infrastructure station.
It is noted that the features from the appending claims can all be combined with each other in order to constitute a variety of embodiments of methods or systems in accordance with to and within the scope of the described invention.

Further, in describing representative examples of the present invention, the specification may have presented the method and/or process of the present invention as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process of the present invention should not be limited to the performance of their steps in the order written, and one skilled in the art can readily appreciate that the sequences may be varied and still remain within the spirit and scope of the present invention.

## Claims

1. A method for performing a handover process in a wireless communication system (50), the method comprising:
allocating a communication channel to a first infrastructure station (500a) in the wireless communication system;
reserving a signature corresponding to the communication channel for the first infrastructure station (500a), the signature enabling a user equipment (504) attached to the first infrastructure station to communicate with a second infrastructure station (500b) in the wireless communication system over the communication channel;
receiving from the user equipment (504) a message including the signature over the communication channel;
determining a timing advance as an offset to a delay of the message; and
sending the timing advance to the user equipment (504) through the first infrastructure station (500a).

2. The method of claim 1 further comprising:
receiving a handover request from the first infrastructure station (500a).

3. The method of claim 2 further comprising:
assigning an identification code for the user equipment (504), the identification code being capable of identifying the user equipment after the user equipment is attached to the second infrastructure station (500b); and
sending a handover request acknowledgement to the first infrastructure station (500a) to inform at least one of the first infrastructure station or the user equipment (504) that the second infrastructure station (500b) is ready for a handover process to attach the user equipment.

4. The method of claim 3, wherein the second infrastructure station (500b) assigns the identification code and sends the handover request acknowledgement in response to the handover request.

5. The method of claim 1 further comprising:
sending communication information to the first infrastructure station (500a), the communication information including information on the communication channel.

6. The method of claim 5, wherein the communication information includes information related to at least one of the resource allocation of the second infrastructure station (500b), the channel condition of the communication channel, the channel bandwidth of the communication channel or the transmission power of the second infrastructure station.

7. The method of claim 1, wherein the communication channel includes a random access channel (RACH).

8. The method of claim 1, wherein the communication channel is allocated by the second infrastructure station (500b) and the signature is reserved by the second infrastructure station.

9. The method of claim 1, wherein the user equipment measures the signal quality in the first and second infrastructure stations (500a; 500b), and generates a measurement report on the signal quality.

10. A method for performing a handover process in a wireless communication system (50), the method comprising:
initiating a handover process;
sending a handover indication to a user equipment (504), the handover indication including a signature provided by an infrastructure station and corresponding to a communication channel allocated by the infrastructure station;
receiving a timing advance as an offset to a delay between the infrastructure station and the user equipment; and
sending the timing advance to the user equipment.

11. The method of claim 10 further comprising:
sending a handover request to the infrastructure station.

12. The method of claim 10, wherein the infrastructure station allocates the communication channel to the user equipment (504) and reserves the signature corresponding to the communication channel for the user equipment.

13. The method of claim 10 further comprising:
receiving a handover request acknowledgement from the infrastructure station, the handover request acknowledgement informing at least one of the user equipment or a serving infrastructure station serving the user equipment that the infrastructure station is ready for the handover process to attach the user equipment.

14. The method of claim 10 further comprising:
sending a message from the user equipment (504) to the infrastructure station over the communication channel, the message including information on the signature.

15. A method for performing a handover process in a wireless communication system (50), the method comprising:
receiving a handover indication from a first infrastructure station (500a), the handover indication including a signature related to a communication channel allocated by a second infrastructure station (500b);
sending a message to the second infrastructure station (500b) over the communication channel, the message including the signature; and
receiving from the first infrastructure station (500a) a timing advance as an offset to a delay between the second infrastructure station and the user equipment.

16. The method of claim 15 further comprising:
sending a handover confirmation to the second infrastructure station (500b), the handover confirmation informing the second infrastructure station that the user equipment is ready for a handover process.

17. The method of claim 15 further comprising:
measuring the signal quality in the first infrastructure station (500a) and the second infrastructure station (500b); and
generating a measurement report on the signal quality.

18. The method of claim 15, wherein the communication channel includes a random access channel (RACH).

19. A method for performing a handover process in a wireless communication system (50), the method comprising:
reserving a channel for a first infrastructure station (500a) in the wireless communication network;
assigning a signature corresponding to the channel;
deciding to switch a user equipment (504) from the first infrastructure station (500a) to a second infrastructure station (500b) in the wireless communication system;
sending a handover indication, the handover indication including the signature;
sending a message to the second infrastructure station (500b) over the channel, the message including the signature;
calculating a timing advance as an offset to a delay between the second infrastructure station (500b) and the user equipment (504); and
sending the timing advance to the user equipment through the first infrastructure station (500a).

20. A wireless communication system (50) for performing a handover process, the system comprising:
a first infrastructure station (500a) configured to decide whether to initiate a handover process for a user equipment (504); and
a second infrastructure station (500b) configured to reserve a channel for the first infrastructure station and assign a signature corresponding to the channel,
wherein the first infrastructure station (500a) is configured to send a handover indication to the user equipment, the handover indication including the signature, and
wherein the second infrastructure station (500b) is configured to receive a message from the user equipment over the channel, the message including the signature, and calculate a timing advance as an offset to a delay between the second infrastructure station and the user equipment.

21. The system of claim 20, wherein the second infrastructure station (500b) is configured to send the timing advance to the user equipment through the first infrastructure station.

22. The system of claim 20, wherein the channel reserved by the second infrastructure station (500b) includes a random access channel (RACH).

23. The system of claim 20, wherein the user equipment (504) is configured to measure the signal quality in the first infrastructure station and the second infrastructure station, and generates a measurement on the signal quality.

24. The system of claim 20, wherein the second infrastructure station (500b) is configured to send a handover request acknowledgement to the first infrastructure station to inform at least one of the first infrastructure station or the user equipment that the second infrastructure station is ready for a handover process to attach the user equipment.

25. The system of claim 20, wherein the second infrastructure station (500b) is configured to assign an identification code to the user equipment, the identification code being capable of identifying the user equipment when the user equipment is attached to the second infrastructure station.
